Europäisches Patentamt

European Patent Office

Office européen des brevets

(19)

(11) Publication number : **0 352 738 B1**

## EUROPEAN PATENT SPECIFICATION

(12)

(45) Date of publication of patent specification :
30.09.92 Bulletin 92/40

(51) Int. Cl.⁵ : **B23K 26/08, B23K 26/06**

(21) Application number : **89113697.0**

(22) Date of filing : **25.07.89**

(54) **Perforating apparatus for web.**

(30) Priority : **28.07.88 JP 186950/88**

(43) Date of publication of application :
**31.01.90 Bulletin 90/05**

(45) Publication of the grant of the patent :
**30.09.92 Bulletin 92/40**

(84) Designated Contracting States :
**DE GB IT SE**

(56) References cited :
EP-A- 0 098 048
GB-A- 2 118 882
US-A- 4 302 654
PATENT ABSTRACTS OF JAPAN vol. 11, no.
296 (M-627)(2743) 25 September 1987, & JP-
A-62 89593 (SHIMADA PHYS & CHEM INDCO
LTD) 24 April 1987

(73) Proprietor : **Japan Tobacco Inc.**
**2-1 Toranomon, 2-Chome**
**Minato-Ku Tokyo 105 (JP)**

(72) Inventor : **Okumoto, Yutaka**
**3-14-5, Nishikubo**
**Musashino-shi Tokyo (JP)**
Inventor : **Furukawa, Takao**
**106 Senjuasahicho-Apartment 5-1,**
**Senjuasashi-cho**
**Adachi-ku Tokyo (JP)**

(74) Representative : **Sajda, Wolf E., Dipl.-Phys. et**
**al**
**MEISSNER, BOLTE & PARTNER**
**Widenmayerstrasse 48 Postfach 86 06 24**
**W-8000 München 86 (DE)**

Jouve, 18, rue Saint-Denis, 75001 PARIS

## Description

The invention relates to a perforating apparatus for forming a plurality of rows of very small holes in a web, comprising: a pair of rotatable guide drums in the form of hollow cylinders and having their respective axes parallel to each other; mask members each constituting part of the outer peripheral surface of the guide drums and having very small openings arranged circumferentially at regular intervals; transportation means for transporting the web so that the web is wound on the outer peripheral surfaces of each guide drum so as to cover part of the mask members on the outer peripheral surface of one of the guide drums, and then to cover part of the mask members on the outer peripheral surface of the other of the guide drums, while causing the guide drums to rotate; and laser beam converging means for converging laser beams through the very small openings of the mask members on the web wound on the guide drums, thereby forming very small holes in the web.

Such a perforating apparatus is disclosed in US-A-4 302 654, wherein for each guide drum a separate laser beam is provided which is introduced and guided by corresponding separate laser beam converging means in order to operate on the associated web.

Recently, many smokers have started to love filter cigarettes of relatively light taste. Commercially available, therefore, are filter cigarettes in which a number of perforations are formed in the tip paper. If the perforations are bored through the tip paper, cigarette smoke can be thinned by air which flows into the mouth through the perforations and the filter, so that tar and nicotine in the smoke can be satisfactorily adsorbed by the filter.

The perforations can be formed in the tip paper by two methods. In one method, a number of perforations are bored through the tip paper of a filter cigarette after the cigarette is finished. In the other method, a great number of perforations are previously bored through a web to be reduced to tip papers, before a cigarette and its filter are connected by means of the tip paper.

Perforating apparatuses for effecting the aforesaid second method are disclosed in US-A- 4,302,654 and US-A-4,507,535, for example. Both these apparatus are provided with a hollow cylindrical mask member which is supported for rotation. A number of openings are formed circumferentially at regular intervals in the peripheral surface of the mask member.

A web is transported in a manner such that it is wound on part of the peripheral surface of the mask member, while causing the mask member to rotate. Laser beams are applied to the web through the openings of the mask member, in the course of the transportation of the web, so that a row or rows of perforations are formed in the web.

The aforementioned conventional perforating apparatus are suited for the formation of one or two rows of perforations. For the formation of three or more rows of perforations, however, the internal construction in the mask member must be complicated. More specifically, in the conventional perforating apparatus , the mask member must contain beam guides as many as the rows of perforations to be bored through the web. Thus, these apparatuses are unfit for the formation of a relatively large number of rows of perforations.

In the conventional perforating apparatus , moreover, rows of openings as many as the rows of perforations to be bored through the web must be formed in the mask member. If the rows of openings are thus independent from one another, it is difficult to make uniform the shape and array of the perforations formed by means of the laser beams applied through the individual rows of openings of the mask member. Accordingly, the external appearance of finished products may possibly be spoiled.

The present invention has been contrived in consideration of these circumstances, and its object is to provide a perforating apparatus of a simple construction, which can form regular rows of perforations of a uniform shape in a web, thereby improving the external appearance of the web.

A perforating apparatus according to the present invention is characterized in that:

– the guide drums are arranged so as to be freely rotatable around the axes, each guide drum having a circumferential opening defined in the outer peripheral wall thereof, separated individual ring-shaped mask members whose outer peripheral surfaces are situated within the same cylindrical plane as the outer peripheral surfaces of the guide drums, and a plurality of slits formed in the mask members so as to extend in the axial direction of the guide drums and be arranged circumferentially at regular intervals, the circumferential openings of the individual guide drums being situated in different axial positions with respect to the axial direction of the guide drums; and in that :

– the laser beam converging means includes

– - a laser beam source for emitting a continuous laser beam parallel to the respective axes of the guide drums toward the region halfway between the guide drums,

– - a two-segment mirror disposed between the laser beam source and the guide drums and adapted to reflect the laser beam, emitted from the laser beam source, toward the respective axes of the guide drums so that the laser beam is divided in two,

– - split beam guide means for guiding split laser beams, obtained by means of the two-segment mirror, into the guide drums so as to be coaxial therewith,

– - multisegment reflection mirrors each fixedly located on the axis of each corresponding guide drum, inside the respective guide drums, and adapted to reflect the split laser beams toward the web wound on the guide drums so that the split laser beams are radially subdivided into a predetermined number of laser beams,

– – as many condensing lenses as laser beams arranged at predetermined intervals within the circumference of one and the same circle between the respective mask member and the multisegment reflection mirror corresponding thereto, and adapted to converge the subdivided laser beams reflected by the multisegment reflection mirrors, on the web on the guide drums through the slits, and

– – adjusting means for deviating the positions of the condensing lenses in the guide drums from each other in the axial direction of the guide drums.

According to a further development of the invention, the apparatus is characterized in that the two-segment mirror is in the form of a triangular prism having a pair of reflecting surfaces adapted to divide and reflect the laser beam emitted from the laser beam source, an edge defined between the reflecting surfaces being directed to the laser beam source and perpendicular to a plane containing the respective axes of the pair of guide drums.

According to a further development of the invention, the apparatus is characterized in that the slit beam guide means includes direction changing mirrors each located on the axis of each corresponding guide drum and adapted individually to reflect the split laser beams, reflected by their corresponding reflecting surfaces of the two-segment mirror, toward the multisegment mirrors in the guide drums.

According to a further development of the invention, the apparatus is characterized in that each multisegment mirror is in the form of a regular polygonal pyramid having edges directed to each corresponding direction changing mirror and situated on the axis of each corresponding guide drum.

According to a further development of the invention, the apparatus in characterized in that each adjusting means includes a holder for holding the condensing lens, guide means for guiding the holder in the axial direction of the guide drum, and feed screw means for moving the holder in the axial direction of the guide drum.

According to a further development of the invention, the apparatus comprises a housing containing the pair of guide drums and a plurality of exhaust ducts connected to the housing.

According to a specific embodiment of the invention, the apparatus further comprises cooling means for cooling the multisegment mirrors.

According to a further development of such an embodiment of the invention, the cooling means includes a cooling pipe having one end opening situated near each corresponding multisegment mirror so that cooling air is ejected from the one end opening toward the multisegment mirror.

According to a further development of the invention, the apparatus is characterized in that each slit has a width of 0,1 mm and the distance between each two adjacent slits is 1,0 mm.

According to the perforating apparatus described above, when the web is transported past the one guide drum, while causing the guide drums, the subdivided laser beams, radially reflected by the multisegment mirrors, are converged on the web through their corresponding condensing lenses and the slits of the mask member. Thus, a plurality of rows of perforations are formed in the one side region of the web with respect to the center line thereof. As the web passes the other guide drum, thereafter, a plurality of rows of perforations are also formed in the other side region of the web.

According to the perforating apparatus of the present invention, one laser beam is divided into split laser beams by means of the two-segment mirror, the split laser beams are further divided by means of the multisegment mirrors disposed individually in the guide drums, and the subdivided laser beams are guided onto the web. Accordingly, the construction of the optical system for guiding the laser beams is simple. Also, in forming two or more rows of perforations in each guide drum, in particular, it is necessary only that the condensing lenses and the reflecting surfaces of each multisegment mirror be increased in number. Thus, the internal construction in the guide drums need not be specially complicated.

The slits of the mask members extend in the transverse direction of the web, and each laser beam converged on the web by means of each condensing lens in each guide drum passes.one and the same slit to form the perforations of the individual rows in the web. Even if the number of rows of the perforations is relatively large, therefore, the shape and size of the individual perforations, as well as the arrangement of the rows, can be made uniform, so that the external appearance of finished products can be improved.

This invention can be more fully understood from the following detailed description when taken in conjunction with the accompanying drawings, in which:

Fig. 1 is a partial sectional view of a perforating apparatus according to an embodiment of the present invention;

Fig. 2 is a schematic perspective view showing part of the perforating apparatus of Fig. 1;

Fig. 3 is an enlarged sectional view showing part of the apparatus of Fig. 1;

Fig. 4 is an enlarged side view showing part of a ring-shaped mask used in the apparatus of Fig. 1;

Fig. 5 is a schematic view of means for transporting a web to the apparatus of Fig. 1;

Fig. 6 is a plan view taken along line VI-VI of Fig. 3;

Fig. 7 is a front view showing part of the web with perforations; and

Fig. 8 is a perspective view showing filter cigarettes connected by means of a perforated tip paper.

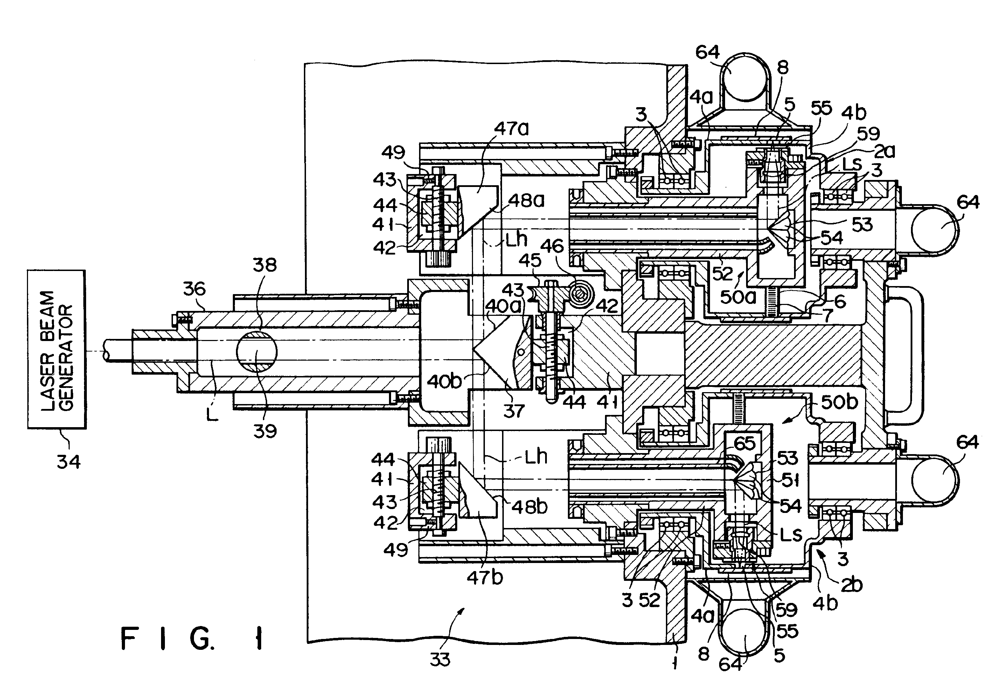

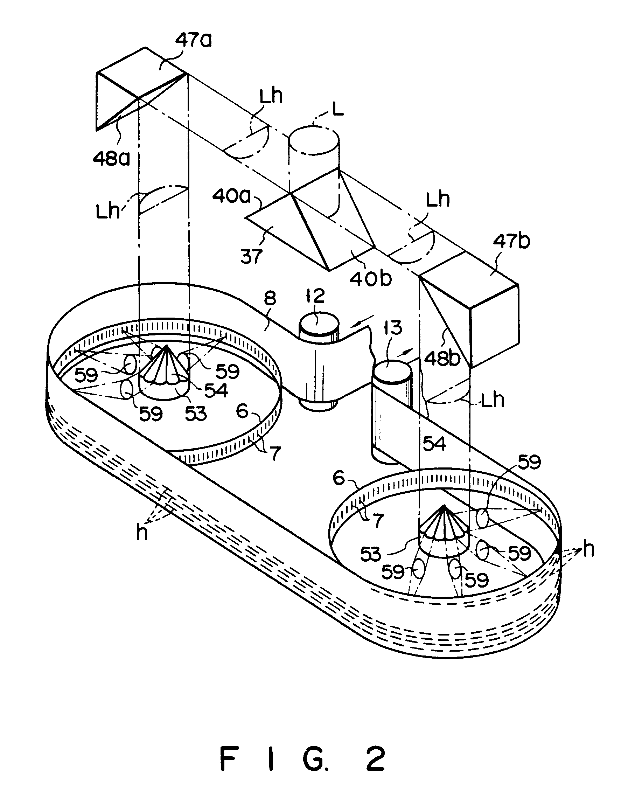

A perforating apparatus shown in Fig. 1 has a frame 1, on which are rotatably mounted a pair of guide drums 2a and 2b, each in the form of a hollow cylinder, by means of bearings 3. As seen from Fig. 1, the guide drums 2a and 2b are juxtaposed to each other. These guide drums are not shown in Fig. 2.

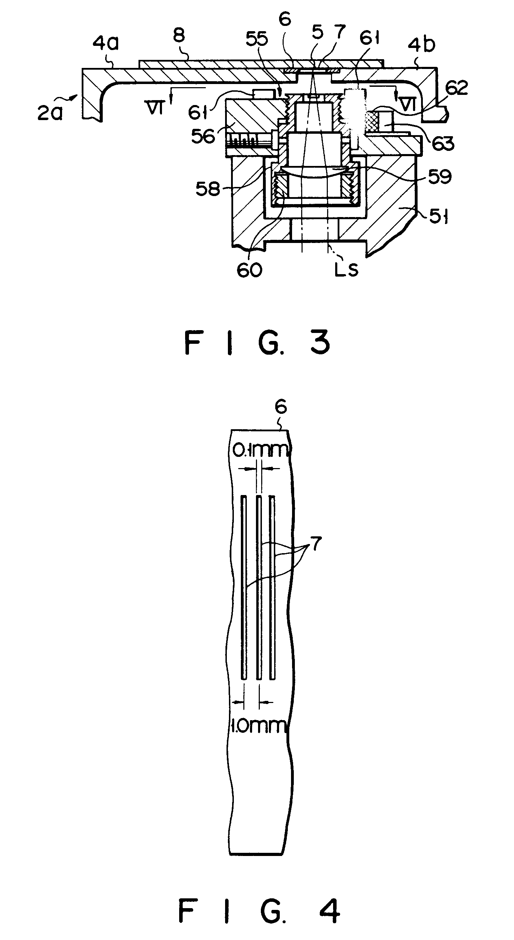

The guide drum 2a is formed of drum halves 4a and 4b. A circumferential opening 5 is defined between halves 4a and 4b. Fig. 3 shows the opening 5 in detail.

The circumferential opening 5 of the guide drum 2a is closed by means of a ring-shaped mask 6. The mask 6, which is made of nickel, has a thickness of 0,1 mm, and a number of slits 7 are arranged on the peripheral surface of the mask, at regular intervals in the circumferential direction thereof. As shown in Fig. 4, the slits 7 extend in the direction of the width of the mask 6. In this embodiment, the pitch of slits 7 is 1,0 mm, and the width of each slit is 0,1 mm.

As seen from Fig. 3, moreover, the respective outer peripheral surfaces of the guide drum 2a and the mask 6 are situated within the same cylindrical plane.

The guide drum 2b has substantially the same construction as guide drum 2a described above. Therefore, like reference numerals are used to designate those members or portions of the guide drum 2b having the same functions as their counterparts of the guide drum 2a. The following is only a description of the differences between the two guide drums. The axial position of the circumferential opening 5 or the mask 6 of the guide drum 2b is different from that of the mask 6 of the guide drum 2a. More specifically, the mask 6 of the guide drum 2a is situated on the right end side of the guide drum 2a, as shown in Fig. 1, while the mask 6 of the guide drum 2b is situated on the left end side of the guide drum 2b.

As seen from Fig. 2, a web 8 is continuously passed around the respective outer peripheral surfaces of the guide drums 2a and 2b. In this embodiment, the web 8 is a paper web which is reduced to tip papers for filter cigarettes.

When the web 8 has passed through the guide drum 2a, it is transported past the guide drum 2b. As web 8 is transported in this manner, the guide drums 2a and 2b are rotated draggingly by the web 8.

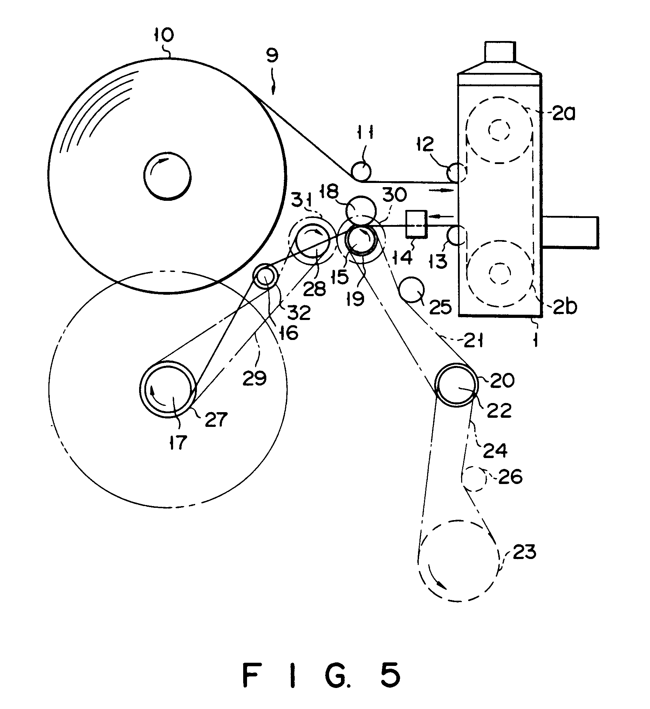

Fig. 5 shows transportation means 9 for the web 8. The transportation means 9 includes a web roll 10 located beside the guide drums 2a and 2b. The web 8 let out from the roll 10 is guided to the guide drum 2a by guide rollers 11 and 12, and is then delivered to the guide drum 2b. Thereafter, the web 8 is transported past a guide roller 13, a guide block 14, a drive roller 15, and a guide roller 16, to be taken up by a takeup roll 17.

The drive roller 15, which is in rolling contact with a pinch roller 18, is fitted coaxially with a toothed pulley 19. A toothed belt 21 is passed around and between the pulley 19 and its mating toothed pulley 20.

Another toothed pulley 22 is mounted on the toothed pulley 20 so as to be coaxial therewith. A toothed belt 24 is passed around and between the pulley 22 and its mating toothed pulley 23. The pulley 23, which is mounted on the output shaft of an electric motor (not shown), can be rotated in the direction of an arrow of Fig. 5. Numerals 25 and 26 designate tension rollers, individually.

A toothed pulley 27 is mounted on the takeup roll 17 so as to be coaxial therewith, and a toothed pulley 28 mating with the toothed pulley 27 is mounted beside the drive roller 19. A toothed belt 29 is passed around and between the pulleys 27 and 28. Gears 30 and 31 in mesh with each other are mounted on the pulley 28 and the roller 19, respectively, so as to be coaxial therewith. Numeral 32 designates a tension pulley which is mounted on the guide roller 16 so as to be coaxial therewith.

According to transportation means 9 constructed in this manner, when the electric motor is driven so that the toothed pulley 23 is rotated in the direction of the arrow, the drive roller 19 is also rotated in the direction of the arrow by means of toothed belts 42 and 21. Accordingly, the web 8 is continuously let out from the web roll 10, and travels past the guide drums 2a and 2b, as mentioned before. As the drive roller 19 rotates in the aforesaid manner, moreover, the takeup roll 17 is also rotated in the direction of the arrow by means of the gears 30 and 31 and the toothed belt 29. Thus, the web 8 transported past the roller 19 is taken up by the roll 17 the moment it is let out from the roll 10.

Fig. 2 shows only the guide rollers 12 and 13 of transportation means 9.

Referring again to Figs. 1 and 2, there will be described beam-perforation means 33 for forming a pair of row groups of perforations in the web 8 passing through the guide drums 2a and 2b.

The beam-perforation means 33 comprises a laser beam generator 34 located outside the frame 1 as shown in a block in Fig. 1. The generator 34 has the function to emit a continuous circular laser beam $\underline{L}$ toward the guide drums 2a and 2b. The laser beam $\underline{L}$ emitted from the generator 34 extends through a tubular beam guide 36, and reaches a two-segment mirror 37. The guide 36 and the mirror 37 are arranged on a central axis between the drums 2a and 2b. An intermission ball 38 for intermitting the passage of beam $\underline{L}$ is rotatably disposed in the beam guide 36. A through hole 39 is bored through the ball 38. Only when the hole 39 of the ball 38 is coaxial with the guide 36, as shown in Fig. 1, the laser beam L from the laser beam generator 34 can pass through the hole 39 to reach the two-segment mirror 37. If the intermission ball 38 is rotated through 90° from the position shown in Fig. 1, the beam L directed to the mirror 37 is intercepted.

The two-segment mirror 37, which is in the form of a triangular prism having one edge directed to the laser beam generator 34, has a pair of reflecting surfaces 40a and 40b divided by the edge and extending at right angles to each other. The edge of the mirror 37 extends at a right angle to the axis of the laser beam L, so that the beam L landing on mirror 37 is divided into two sections Lh, in two directions perpendicular to its axis, as it is reflected by the surfaces 40a and 40b.

The two-segment mirror 37 is mounted on the frame 1 by means of a holder block 41. More specifically, the mirror 37 is mounted on the block 41 so that its position can be adjusted in the direction perpendicular to the axis of the laser beam L emitted from the laser beam generator 34. A recess 42 is formed in the mirror-side end face of the holder block 41, and a feed screw 43 is rotatably attached to the block 41 so as to penetrate the recess 42. In the recess 42, a screw 43 is threadedly engaged with a nut member 44, which is fixed to the two-segment mirror 37 and is prevented from rotating. A worm wheel 45 is mounted on one end of the screw 43, and a worm 46 is in mesh with the wheel 45. When the worm 46 is rotated by drive means (not shown), this rotation is transmitted through the worm wheel 45 to the feed screw 43, so that the screw 43 is also rotated. Thus, the position of the two-segment mirror 37 can be adjusted in the direction perpendicular to the axis of the laser beam L by means of the nut member 44.

Since the position of the two-segment mirror 37 is adjustable in this manner, the aforesaid side of the mirror 37 can be accurately aligned with the axis of the laser beam L. Accordingly, split laser beams Lh reflected individually by the reflecting surfaces 40a and 40b of the mirror 37 have a precise semicircular shape, as shown in Fig. 2.

Two split laser beams Lh obtained by bisecting laser beam L by means of the two-segment mirror 37 reach direction changing mirrors 47a and 47b, individually, whereupon they are reflected by reflecting surfaces 48a and 48b of the mirrors 47a and 47b. Surfaces 48a and 48b of the mirrors 47a and 47b face the reflecting surfaces 40a and 40b, respectively, of the two-segment mirror 37 in parallel relation. Thus, the split laser beams Lh reflected by the mirrors 47a and 47b face their corresponding guide drums 2a and 2b, in parallel with the original laser beam L.

The direction changing mirrors 47a and 47b are mounted so that their positions can be adjusted by means of mechanisms similar to the adjusting mechanism for the two-segment mirror 37. Therefore, like reference numerals are used to designate those members having the same functions as their counterparts of the position adjusting mechanism for the mirror 37. In the position adjusting mechanisms for the direction changing mirrors 47a and 47b, the feed screw 43 is adapted to be manually rotated, and the holder block 41 is provided with a setscrew 49 for preventing the screw 43 from rotating after the position adjustment for each direction changing mirror.

The split laser beams Lh, whose direction is changed by the direction changing mirrors 47a and 47b, are guided into beam distributors 50a and 50b, respectively. The following is a representative description of the beam distributor 50a associated with the mirror 47a.

The beam distributor 50a includes a cylindrical mirror housing 51 disposed in the guide drum 2a. A tubular beam guide 52 extends from the housing 51. It projects toward the direction changing mirror 47a, outside the guide drum 2a. The projecting end of the guide 52, opened to the reflecting surface 48a of the mirror 47a, is fixedly retained by means of the frame 1.

A multisegment mirror 53 is attached to the inner wall surface of the mirror housing 51 which faces the reflecting surface 48a of the direction changing mirror 47a. In this embodiment, the mirror 53 is in the form of a regulator octagonal pyramid, and has eight reflecting surfaces 54 in total. Each surface 54 is inclined at the angle of 45° to split laser beam Lh redirected by the mirror 47a.

Split laser beam Lh, redirected by the direction changing mirror 47a, passes through the beam guide 52 to enter the mirror housing 51, whereupon it is applied to only one half of the reflecting surfaces 54 of the multisegment mirror 53, that is, four surfaces 54 which face in the direction opposite to the other guide drum 2b. It is to be understood that such positioning of the split laser beam Lh is effected by means of the aformentioned position adjusting mechanism.

Accordingly, the subdivided laser beams Ls, which are obtained by further fractionizing the split laser beam Lh by means of four reflecting surfaces 54 of the multisegment mirror 53, extend radially outward with respect to the guide drum 2a, that is, toward the web 8 on the drum 2a.

Converging units 55, as many as and corresponding to subdivided laser beams Ls, are arranged circumferentially at intervals on the peripheral surface of the mirror housing 51. Figs. 3 and 6 show one of the units 55 in detail.

Each converging unit 55 includes a movable block 56 which is attached to the peripheral surface of the mirror housing 51 so as to be movable in the axial direction of the guide drum 2a, that is, in the transverse direction of the web 8. In Fig. 6, numerals 57a and 57b designate guide surfaces which are formed on the peripheral surface of the housing 51 to guide the movable block 56.

A lens holder 58 is attached to the movable block 56. It is in the form of a hollow stepped cylinder open at both ends. The holder 58 is fixed to the block 56 so that its small-diameter end is movably screwed in the block 56. A condensing lens 59 is housed in the lens holder 58. It is fixedly retained by means of a retaining ring 60 which is screwed in the large-diameter end portion of the holder 58. The lens 59 has the function to converge subdivided laser beam Ls on the web 8 through the slits 7 of the mask 6 on the guide drum 2a. Thus, the focus of the lens 59 is on the web 8 wound on the guide drum 2a.

As described above, the condensing lenses 59 of converging units 55 converge the subdivided laser beams Ls on the web 8. The focal positions of the lenses 59, however, are deviated from one another in the transverse direction of the web 8. This deviation can be obtained by shifting the movable blocks 56. In this embodiment, the positions of the blocks 56 of the converging units 55 can be adjusted by means of a mechanism similar to the aforementioned adjusting mechanisms for the two-segment mirror 37 and the direction changing mirrors 47a and 47b. As shown in Fig. 6, a pair of brackets 61 are formed on the mirror housing 51. A feed screw 62, which is rotatably supported between the brackets 61, is threadedly engaged whit a nut member 56a which is fixed to the movable block 56. Numeral 63 designates a setscrew for fixing the block 56 to the housing 51.

The beam distributor 50a described above is associated with the guide drum 2a. The other beam distributor 50b, which is associated with the guide drum 2b, basically has the same construction as the distributor 50a. Therefore, like reference numerals are used to designate those members of the distributor 50b having the same functions as their counterparts of the distributor 50a.

The beam distributor 50b differs from the beam distributor 50a in that the mirror housing 51 is shifted with respect to the axial direction of the guide drum 2b. This is because the position of the mask 6 on the drum 2b is deviated from that of the mask 6 on the guide drum 2a in the axial direction, as mentioned before.

In Fig. 1, numeral 64 designates exhaust ducts through which smoke emitted from the web 8 by perforation work using the laser beam is discharged. Numeral 65 designates passages for cooling air for cooling the multisegment mirror 53. Passages 65 are connected to a cooling air source (not shown).

According to the perforating apparatus described above, the guide 2a or the mask 6 rotates as the web 8 passes the guide drum 2a. In this state, if the subdivided laser beams Ls transmitted through the converging units 55 or the condensing lenses 59 of the beam distributor 50a are converged on the web 8 through the slits 7 of the mask 6, perforations h are successively formed in the web 8 at intervals in the longitudinal direction thereof. In this arrangement, the position of the mask 6 on the guide drum 2a is one-sided, and also, the focal positions of the condensing lenses 59 of the beam distributor 50a are deviated from one another in the transverse direction of the web 8. Thus, as shown in Fig. 2, four rows of perforations are bored through one side region of the web 8 transported past the guide drum 2a.

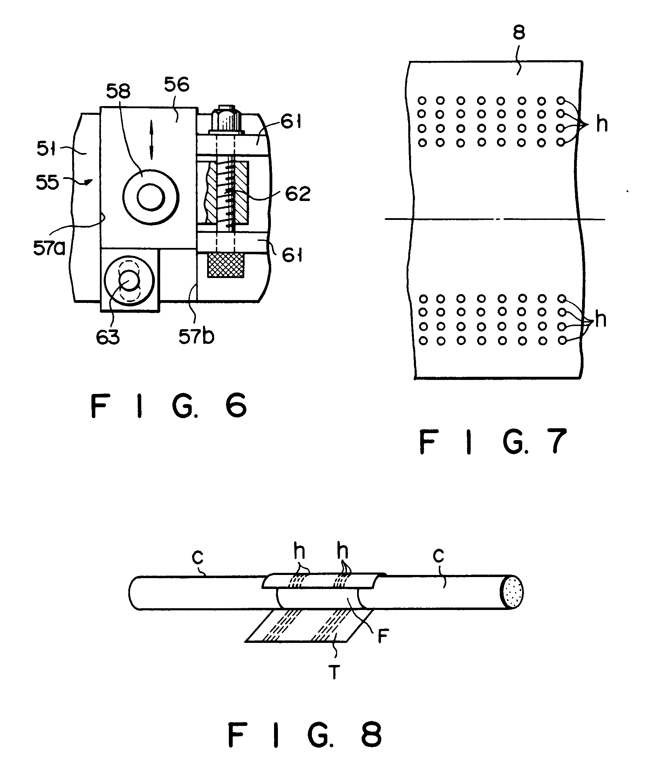

Thereafter, when the web 8 passes the guide drum 2b, four rows of perforations are also bored through the web 8 by means of the beam distributor 50b of the drum 2b. The mask 6 of the distributor 50b or the guide drum 2b is situated on that side end portion of the drum 2b opposite to the side of the mask 6 of the guide drum 2a. Thus, as shown in Fig. 2, the latter four rows of perforations are bored through the other side region of the web 8 transported past the guide drum 2b. Finally, therefore, a pair of four-row lines of perforations are separately formed in the ribbonlike web 8 transported past the pair of guide drums 2a and 2b, as shown in Fig. 7.

The web 8, perforated in this manner, is cut into tip papers T of a predetermined length. Each tip paper T, as shown in Fig. 8, is wound around two cigarettes C and filter F for two cigarettes to connect them with one another. Thereafter, the resulting half-finished good for two filter cigarettes is cut in two in the middle. Thus, two independent filter cigarettes can be obtained as finished products.

## Claims

1. A perforating apparatus for forming a plurality of rows of very small holes in a web (8), comprising:
   – a pair of rotatable guide drums (2a, 2b) in the form of hollow cylinders and having their respective axes parallel to each other;
   – mask members (6) each constituting part of the outer peripheral surface of the guide drums (2a, 2b) and having very small openings (7) arranged circumferentially at regular intervals;
   – transportation means (9) for transporting the web (8) so that the web (8) is wound on the outer peripheral surfaces of each guide drum (2a, 2b) so as to cover part of the mask members (6) on the outer peripheral surface of one of the guide drums (2a, 2b), and then to cover part of the mask members (6) on the outer peripheral surface of the other of the guide drums (2a, 2b), while causing the guide drums (2a, 2b) to rotate; and
   – laser beam converging means for converging laser beams (L) through the very small openings (7) of the mask members (6) on the web (8) wound on the guide drums (2a, 2b), thereby forming very small holes (h) in the web (8), characterized in that:

– the guide drums (2a, 2b) are arranged so as to be freely rotatable around the axes, each guide drum (2a, 2b) having a circumferential opening (5) defined in the outer peripheral wall thereof, separated individual ring-shaped mask members (6) whose outer peripheral surfaces are situated within the same cylindrical plane as the outer peripheral surfaces of the guide drums (2a, 2b), and a plurality of slits (7) formed in the mask members (6) so as to extend in the axial direction of the guide drums (2a, 2b) and be arranged circumferentially at regular intervals, the circumferential openings (5) of the individual guide drums (2a, 2b) being situated in different axial positions with respect to the axial direction of the guide drums (2a, 2b); and in that :

– the laser beam converging means includes

  – - a laser beam source (34) for emitting a continuous laser beam (L) parallel to the respective axes of the guide drums (2a, 2b) toward the region halfway between the guide drums (2a, 2b),

  – - a two-segment mirror (37) disposed between the laser beam source (34) and the guide drums (2a, 2b) and adapted to reflect the laser beam (L), emitted from the laser beam source (34), toward the respective axes of the guide drums (2a, 2b) so that the laser beam (L) is divided in two,

  – - split beam guide means (47a, 47b) for guiding split laser beams (Lh), obtained by means of the two-segment mirror (37), into the guide drums (2a, 2b) so as to be coaxial therewith,

  – - multisegment reflection mirrors (53) each fixedly located on the axis of each corresponding guide drum (2a, 2b), inside the respective guide drums (2a, 2b), and adapted to reflect the split laser beams (Lh) toward the web (8) wound on the guide drums (2a, 2b) so that the split laser beams (Lh) are radially subdivided into a predetermined number of laser beams (Ls),

  – - as many condensing lenses (59) as laser beams (Ls) arranged at predetermined intervals within the circumference of one and the same circle between the respective mask member (6) and the multisegment reflection mirror (53) corresponding thereto, and adapted to converge the subdivided laser beams (Ls), reflected by the multisegment reflection mirrors (53), on the web (8) on the guide drums (2a, 2b) through the slits (7), and

  – - adjusting means (58, 61, 62) for deviating the positions of the condensing lenses (59) in the guide drums (2a, 2b) from each other in the axial direction of the guide drums (2a, 2b).

2. The perforating apparatus according to claim 1, characterized in that the two-segment mirror (37) is in the form of a triangular prism having a pair of reflecting surfaces (40a, 40b) adapted to divide and reflect the laser beam (L) emitted from the laser beam source (34), and edge defined between the reflecting surfaces (40a, 40b) being directed to the laser beam source (34) and perpendicular to a plane containing the respective axes of the pair of guide drums (2a, 2b).

3. The perforating apparatus according to claim 1 or 2, characterized in that the split beam guide means includes direction changing mirrors (47a, 47b) each located on the axis of each corresponding guide drum (2a, 2b) and adapted individually to reflect the split laser beams (Lh), reflected by their corresponding reflecting surfaces (40a, 40b) of the two-segment mirror (37), toward the multisegment mirrors (53) in the guide drums (2a, 2b).

4. The perforating apparatus according to any of claims 1 to 3, characterized in that each multisegment mirror (53) is in the form of a regular polygonal pyramid having edges directed to each corresponding direction changing mirror (47a, 47b) and situated on the axis of each corresponding guide drum (2a, 2b).

5. The perforating apparatus according to any of claims 1 to 4, characterized in that each adjusting means (58,61,62) includes a holder (58) for holding the condensing lens (59), guide means (57a, 57b) for guiding the holder (58) in the axial direction of the guide drum (2a, 2b), and feed screw means (61, 62) for moving the holder (58) in the axial direction of the guide drum (2a, 2b).

6. The perforating apparatus according to any of claims 1 to 5, further comprising a housing (1) containing the pair of guide drums (2a, 2b) and a plurality of exhaust ducts (64) connected to the housing (1).

7. The perforating apparatus according to any of claims 1 to 6, further comprising cooling means (65) for cooling the multisegment mirrors (53).

8. The perforating apparatus according to claim 7, characterized in that the cooling means includes a cooling pipe (65) having one end opening situated near each corresponding multisegment mirror (53) so that cooling air is ejected from the one end opening toward the multisegment mirror (53).

9. The perforating apparatus according to any of claims 1 to 8, characterized in that each slit (7) has a width of 0,1 mm and the distance between each two adjacent slits (7) is 1,0 mm.

**Patentansprüche**

1. Perforiervorrichtung zum Bilden einer Vielzahl von Reihen sehr kleiner Löcher in einer Bahn (8), wobei die Vorrichtung folgendes aufweist:
   – ein Paar von drehbaren Führungstrommeln (2a, 2b) in Form von Hohlzylindern, deren jeweilige Achsen parallel zueinander sind;
   – Maskenelemente (6), die jeweils einen Teil der Außenumfangsfläche der Führungstrommeln (2a, 2b) bilden und sehr kleine Öffnungen (7) haben, die umfangsmäßig in regelmäßigen Abständen angeordnet sind;
   – eine Transporteinrichtung (9), um die Bahn (8) zu transportieren, so daß die Bahn (8) auf die Außenumfangsflächen jeder Führungstrommel (2a, 2b) gewickelt wird, um einen Teil der Maskenelemente (6) an der Außenumfangsfläche der einen der Führungstrommeln (2a, 2b) abzudecken und dann einen Teil der Maskenelemente (6) an der Außenumfangsfläche der anderen der Führungstrommeln (2a, 2b) abzudecken und gleichzeitig ein Drehen der Führungstrommeln (2a, 2b) zu bewirken; und
   – eine Laserstrahlbündelungseinrichtung, um Laserstrahlen (L) durch die sehr kleinen Öffnungen (7) der Maskenelemente (6) auf die Bahn (8) zu bündeln, die auf die Führungstrommeln (2a, 2b) gewickelt ist, um dadurch sehr kleine Löcher (h) in der Bahn (8) zu bilden,
   dadurch gekennzeichnet, daß:
   – die Führungstrommeln (2a, 2b) um die Achsen herum frei drehbar angeordnet sind, wobei jede Führungstrommel (2a, 2b) folgendes aufweist: eine Umfangsöffnung (5), die in ihrer Außenumfangswand definiert ist, getrennte einzelne ringförmige Maskenelemente (6), deren Außenumfangsflächen in der gleichen zylindrischen Ebene wie die Außenumfangsflächen der Führungstrommeln (2a, 2b) liegen, und eine Vielzahl von Schlitzen (7), die in den Maskenelementen (6) ausgebildet sind, um in der Axialrichtung der Führungstrommeln (2a, 2b) zu verlaufen und umfangsmäßig in regelmäßigen Abständen angeordnet zu sein, wobei die Umfangsöffnungen (5) der einzelnen Führungstrommeln (2a, 2b) in bezug auf die Axialrichtung der Führungstrommeln (2a, 2b) in verschiedenen axialen Positionen liegen; und daß:
   – die Laserstrahlbündelungseinrichtung folgendes aufweist:
      – – eine Laserstrahlquelle (34), um einen kontinuierlichen Laserstrahl (L) parallel zu den jeweiligen Achsen der Führungstrommeln (2a, 2b) in Richtung zu dem Bereich in der Mitte zwischen den Führungstrommeln (2a, 2b) auszusenden,
      – – einen Zwei-Segment-Spiegel (37), der zwischen der Laserstrahlquelle (34) und den Führungstrommeln (2a, 2b) angeordnet und ausgebildet ist, um den von der Laserstrahlquelle (34) ausgesandten Laserstrahl (L) in Richtung zu den jeweiligen Achsen der Führungstrommeln (2a, 2b) zu reflektieren, so daß der Laserstrahl (1) zweigeteilt wird,
      – – Spaltstrahlführungseinrichtungen (47a, 47b), um durch den Zwei-Segment-Spiegel (37) erhaltene Spaltlaserstrahlen (Lh) in die Führungstrommeln (2a, 2b) zu führen, so daß die Spaltlaserstrahlen koaxial damit sind,
      – – Multisegment-Reflexionsspiegel (53), die jeweils fest auf der Achse jeder entsprechenden Führungstrommel (2a, 2b) im Inneren der jeweiligen Führungstrommeln (2a, 2b) angeordnet und ausgebildet sind, um die Spaltlaserstrahlen (Lh) in Richtung zu der auf die Führungstrommeln (2a, 2b) gewickelten Bahn (8) zu reflektieren, so daß die Spaltlaserstrahlen (Lh) radial in eine vorbestimmte Anzahl von Laserstrahlen (Ls) unterteilt werden,
      – – gleich viele Kondensorlinsen (59) wie Laserstrahlen (Ls), die in vorbestimmten Abständen im Umfang ein und desselben Kreises zwischen dem jeweiligen Maskenelement (6) und dem entsprechenden Multisegment-Reflexionsspiegel (53) angeordnet und ausgebildet sind, um die von den Multisegment-Reflexionsspiegeln (53) reflektierten unterteilten Laserstrahlen (Ls) durch die Schlitze (7) auf die Bahn (8) auf den Führungstrommeln (2a, 2b) zu bündeln, und
      – – Einstelleinrichtungen (58, 61, 62), um die Positionen der Kondensorlinsen (59) in den Führungstrommeln (2a, 2b) in der Axialrichtung der Führungstrommeln (2a, 2b) voneinander verschieden zu machen.

2. Perforiervorrichtung nach Anspruch 1, dadurch gekennzeichnet, daß der Zwei-Segment-Spiegel (37) in Form eines dreiseitigen Prismas mit einem Paar von Reflexionsflächen (40a, 40b) ist, die ausgebildet sind, um den von der Laserstrahlquelle (34) ausgesandten Laserstrahl (L) zu teilen und zu reflektieren, wobei eine Kante, die zwischen den Reflexionsflächen (40a, 40b) definiert ist, auf die Laserstrahlquelle (34) gerichtet und senkrecht zu einer Ebene ist, die die jeweiligen Achsen des Paars von Führungstrommeln (2a, 2b) enthält.

3. Perforiervorrichtung nach Anspruch 1 oder 2, dadurch gekennzeichnet, daß die Spaltstrahlführungseinrichtungen Umlenkspiegel (47a, 47b) aufweisen, die jeweils auf der Achse jeder entsprechenden Führungstrommel (2a, 2b) angeordnet und ausgebildet sind, um die von ihren entsprechenden Reflexionsflächen (40a, 40b) des Zwei-Segment-Spiegels (37) reflektierten Spaltlaserstrahlen (Lh) einzeln in Richtung zu den Multisegment-Spiegeln (53) in den Führungstrommeln (2a, 2b) zu reflektieren.

4. Perforiervorrichtung nach einem der Ansprüche 1 bis 3, dadurch gekennzeichnet, daß jeder Multisegment-Spiegel (53) in Form einer regelmäßigen Polygonpyramide ist, die Kanten hat, die auf jeden entsprechenden Umlenkspiegel (47a, 47b) gerichtet sind, und die auf der Achse jeder entsprechenden Führungstrommel (2a, 2b) angeordnet ist.

5. Perforiervorrichtung nach einem der Ansprüche 1 bis 4, dadurch gekennzeichnet, daß jede Einstelleinrichtung (58, 61, 62) folgendes aufweist: einen Halter (58), um die Kondensorlinse (59) zu halten, Führungseinrichtungen (57a, 57b), um den Halter (58) in der Axialrichtung der Führungstrommel (2a, 2b) zu führen, und Vorschubspindeln (61, 62), um den Halter (58) in der Axialrichtung der Führungstrommel (2a, 2b) zu bewegen.

6. Perforiervorrichtung nach einem der Ansprüche 1 bis 5, die ferner ein Gehäuse (1) aufweist, das das Paar von Führungstrommeln (2a, 2b) und eine Vielzahl von Auslaßkanälen (64) enthält, die mit dem Gehäuse (1) verbunden sind.

7. Perforiervorrichtung nach einem der Ansprüche 1 bis 6, die ferner eine Kühleinrichtung (65) aufweist, um die Multisegment-Spiegel (53) zu kühlen.

8. Perforiervorrichtung nach Anspruch 7, dadurch gekennzeichnet, daß die Kühleinrichtung ein Kühlrohr (65) aufweist, dessen eine Endöffnung nahe jedem entsprechenden Multisegment-Spiegel (53) angeordnet ist, so daß Kühlluft aus der einen Endöffnung in Richtung zu dem Multisegment-Spiegel (53) ausgestoßen wird.

9. Perforiervorrichtung nach einem der Ansprüche 1 bis 8, dadurch gekennzeichnet, daß jeder Schlitz (7) eine Breite von 0,1 mm hat und der Abstand zwischen jeweils zwei benachbarten Schlitzen (7) 1,0 mm ist.

**Revendications**

1. Appareil de perforation, pour former une pluralité de rangées de trous très petits (dans une bande de papier (8), comprenant :
   – un couple de tambours de guidage rotatifs (2a,2b) se présentant sous forme de cylindres creux et dont les axes respectifs sont parallèles;
   – des organes servant de masques (6), faisant chacun partie de la surface périphérique extérieure des tambours de guidage (2a,2b) et comportant de très petites ouvertures (7), disposées circonférentiellement à intervalles réguliers;
   – des moyens de transport (9), pour transporter la bande (8) de telle façon qu'elle soit enroulée sur les surfaces périphériques extérieures de chaque tambour de guidage (2a, 2b) , de façon à recouvrir une partie des organes servant de masques (6) situés sur la surface périphérique extérieure de l'un des tambours de guidage (2a,2b), et à recouvrir ensuite une partie des organes servant de masques (6) situés sur la surface périphérique extérieure de l'autre tambour de guidage (2a,2b), tout en provoquant la rotation des tambours de guidage (2a,2b); et
   – un moyen de convergence de faisceau laser, destiné à faire converger des faisceaux laser (L) à travers les très petites ouvertures (7) des organes servant de masques (6), sur la bande (8) enroulée sur les tambours de guidage (2a,2b), de manière à former de très petits trous (h) dans la bande (8) ;
   caractérisé en ce que:
   – les tambours de guidage (2a,2b) sont disposés de façon à pouvoir tourner librement sur leurs axes, chaque tambour de guidage (2a,2b) comportant une ouverture circonférentielle (5) définie dans sa paroi périphérique extérieure, des organes servant de masques (6) annulaires, séparés individuellement, dont les surfaces périphériques extérieures sont situées dans le même plan cylindrique que les surfaces périphériques extérieures des tambours de guidage (2a, 2b) , et une pluralité de fentes (7), formées dans les organes servant de masques (6), de façon à s'étendre dans la direction axiale des tambours de guidage (2a,2b) et disposés circonférentiellement à intervalles réguliers, les ouvertures circonférentielles (5) des tambours de guidage (2a,2b) individuels étant situées dans des positions axiales différentes par rapport à la direction axiale des tambours de guidage (2a, 2b) ; et en ce que :

– le moyen de convergence de faisceau laser comprend

– une source de faisceau laser (34), pour émettre un faisceau laser continu (L) parallèle aux axes respectifs des tambours de guidage (2a,2b), en direction de la zone située à mi-chemin entre les tambours de guidage (2a,2b),

– un miroir bisegment (37), disposé entre la source de faisceau laser (34) et les tambours de guidage (2a,2b) et adapté pour réfléchir le faisceau laser (L), émis par la source de faisceau laser (34), en direction des axes respectifs des tambours de guidage (2a,2b), de telle façon que le faisceau laser (L) soit divisé en deux,

– des moyens de guidage de faisceaux divisés (47a, 47b) destinés à guider les faisceaux laser divisés (Lh) obtenus au moyen du miroir bisegment (37), à l'intérieur des tambours de guidage (2a,2b), de façon coaxiale avec ces derniers,

– des miroirs de réflexion multisegment (53), situés chacun fixe sur l'axe de chaque tambour de guidage (2a,2b) correspondant, à l'intérieur des tambours de guidage respectifs (2a,2b), et adaptés pour réfléchir les faisceaux laser divisés (Lh) en direction la bande (8) enroulée autour des tambours de guidage (2a,2b), de telle façon que les faisceaux laser divisés (Lh) soient subdivisés radialement en un nombre prédéterminé de faisceaux laser (Ls),

– des lentilles convergentes (59), en nombre égal à celui des faisceaux laser (Ls), disposées à des intervalles prédéterminés sur la circonférence d'un seul et même cercle, entre l'organe servant de masque (6) respectif et le miroir de réflexion multisegment (53) lui correspondant, et adaptées pour faire converger les faisceaux laser subdivisés (Ls), réfléchis par les miroirs multisegment (53), sur la bande (8) placée sur les tambours de guidage (2a,2b), à travers les fentes (7), et

– des moyens d'ajustement (58,61,62) destinés à modifier les unes par rapport aux autres les positions des lentilles convergentes (59) dans les tambours de guidage (2a,2b), dans la direction axiale des tambours de guidage (2a,2b).

2. Appareil de perforation selon la revendication 1, caractérisé en ce que le miroir bisegment (37) se présente sous la forme d'un prisme triangulaire, comportant un couple de surfaces réfléchissantes (40a,40b) adaptées pour diviser et réfléchir le faisceau laser (L) émis par la source de faisceau laser (34), un bord, défini entre les surfaces réfléchissantes (40a,40b), étant orienté vers la source de faisceau laser (34) et perpendiculairement à un plan contenant les axes respectifs du couple de tambours de guidage (2a,2b).

3. Appareil de perforation selon la revendication 1 ou 2, caractérisé en ce que les moyens de guidage de faisceaux divisés comprennent des miroirs de changement de direction (47a,47b), situés chacun sur l'axe de chaque tambour de guidage (2a,2b) correspondant et adaptés individuellement pour réfléchir les faisceau laser divisés (Lh), réfléchis par les surfaces réfléchissantes correspondantes (40a,40b) du miroir bisegment (37), en direction des miroirs multisegment (53) situés dans les tambours de guidage (2a,2b).

4. Appareil de perforation selon l'une quelconque des revendications 1 à 3, caractérisé en ce que chaque miroir multisegment (53) se présente sous la forme d'une pyramide polygonale régulière, comportant des bords orientés vers chaque miroir de changement de direction (47a,47b) correspondant et situés sur l'axe de chaque tambour de guidage (2a,2b) correspondant.

5. Appareil de perforation selon l'une quelconque des revendications 1 à 4, caractérisé en ce que chaque moyen d'ajustement (58,31,32) comprend un support (58) destiné à supporter la lentille convergente (59), un moyen de guidage (57a,57b) destiné à guider le support (58) suivant la direction axiale du tambour de guidage (2a,2b), et des moyens à vis d'avance (61,62), destinés à déplacer le support (58) dans la direction axiale du tambour de guidage (2a, 2b) .

6. Appareil de perforation selon l'une quelconque des revendications 1 à 5, comprenant en outre un carter (1), contenant le couple de tambours de guidage (2a,2b) et une pluralité de conduite d'échappement (64) reliées au carter (1).

7. Appareil de perforation selon l'une quelconque des revendications 1 à 6, comprenant en outre un moyen de refroidissement (65) destiné à refroidir les miroirs multisegment (53) .

8. Appareil de perforation selon la revendications 7, caractérisé en ce que ledit moyen de refroidissement comprend un tuyau de refroidissement (65), comportant une ouverture d'extrémité située près de chaque miroir multisegment (53) correspondant, de manière à ce que de l'air de refroidissement soit éjecté de l'ouverture d'extrémité, en direction du miroir multisegment (53).

9. Appareil de perforation selon l'une quelconque des revendications 1 à 8, caractérisé en ce que chaque fente (7) présente une largeur de 0,1 mm et la distance entre chaque couple de fentes (7) adjacentes est de 1,0 mm.

LASER BEAM GENERATOR

F I G. 1

F I G. 2

F I G. 3

F I G. 4

F I G. 5

F I G. 6

F I G. 7

F I G. 8